# FASCICULE DE BREVET EUROPEEN

(11) **EP 1 317 033 B1**
(45) Date de publication et mention de la délivrance du brevet: **23.03.2011**
(21) Numéro de dépôt: 02292453.4
(22) Date de dépôt: 04.10.2002
(51) Int. Cl.: H01S 3/0941

(54) **Amplificateur d'un faisceau laser par pompage d'un matériau non linéaire et dispositif d'émission laser comportant un tel amplificateur**
Verstärkung eines Laserstrahls durch Pumpen eines nicht-linearen Mediums und Laservorrichtung mit solchem Verstärker
Laser beam amplification through pumping of a non-linear medium and laser device comprising such an amplifier

(30) Priorité: 05.10.2001 FR 0112850
(43) Date de publication de la demande: 04.06.2003
(73) Titulaire: SAGEM Défense Sécurité, 75015 Paris (FR)
(72) Inventeur: Lucas, André, 94360 Bry sur Marne (FR); Pealat, Michel, 91190 Gif sur Yvette (FR)
(74) Mandataire: Callon de Lamarck, Jean-Robert

(56) Documents cités:
- EP-A- 0 869 591
- EP-A- 0 902 511
- EP-A- 1 137 130
- WO-A-99/33150
- PATENT ABSTRACTS OF JAPAN vol. 1995, no. 07, 31 août 1995 (1995-08-31) & JP 07 094813 A (MITSUBISHI HEAVY IND LTD), 7 avril 1995 (1995-04-07)

## Description

L'invention concerne un dispositif pour l'amplification d'un faisceau laser par pompage d'un matériau non linéaire.

Elle concerne également un dispositif d'émission comportant un tel dispositif d'amplification.

Les dispositifs d'amplification et d'émission laser proposés par l'invention trouvent en particulier avantageusement application dans des domaines où des émissions de moyenne ou forte énergie sont souhaitées, notamment dans le domaine militaire pour la réalisation de contre-mesures optiques, ou encore pour la réalisation de sources primaires en lithographie EUV, ou encore la réalisation d'outils de traitement laser nécessitant de hautes énergies (application au grenaillage, etc.).

Ils peuvent également trouver application dans d'autres domaines, comme celui des télécommunications.

Les techniques de pompage par diodes sur des disques de matériaux actifs non linéaire permettent une bonne efficacité pour des milieux actifs variés Nd, Yag, Yb: Yag ou autres. Des puissances de l'ordre du multi kilowatt peuvent être obtenues pour des lasers quasi 3 niveaux comme Yb-Yag.

L'extension à de fortes énergies n'est pas actuellement possible de part les surfaces réduites que l'on peut pomper dans les dispositifs existants, la densité de pompage requise étant de l'ordre de 1Jcm² pour le matériau ND: Yag à 9J / cm² pour l'Yb: Yag,.

L'invention présente l'avantage de permettre des émissions de moyenne ou forte énergie.

Elle présente également l'avantage de proposer une solution de pompage par diodes, qui présente l'avantage d'être à la fois compact, efficace et de bonne qualité.

On connaît déjà, notamment par WO 9933150 ou encore EP 1 137 130 ou EP 869 591 des structures comportant un amplificateur de faisceau de type laser comprenant un élément de matériau actif non linéaire, ainsi que des diodes de pompage et une structure optique apte à guider par réflexions successives la lumière émise par lesdites diodes de pompage jusqu'à l'élément actif.

Toutefois, la structure décrite dans ce document, outre qu'elle n'est pas compacte, ne permet un pompage qu'avec un nombre de diodes limité.

Elle ne permet pas des émissions de moyenne ou forte énergie.

L'invention propose quant à un amplificateur selon la revendication 1.

Avec une telle disposition où la lumière desdites diodes est guidée par réflexion dans l'épaisseur de ladite structure jusqu'à l'élément actif et concentrée sur celui-ci, il est possible de disposer d'un nombre de diodes important et donc d'une amplification tout à fait conséquente.

En outre, cette disposition sur un élément formant puits thermique contribue également à permettre de fortes puissances d'amplification.

Notamment, dans une variante avantageuse, les diodes sont réparties à la périphérie de l'élément formant lentille de guidage.

Dans une autre variante également avantageuse, la lumière émise par les diodes est guidée jusqu'à l'élément formant lentille de guidage par des moyens de type fibres optiques.

D'autres caractéristiques, buts et avantages de l'invention apparaîtront à la lecture de la description détaillée qui va suivre, faite en référence aux figures annexées sur lesquelles :
- la figure 1 est une coupe verticale d'un élément d'amplification, conforme à l'invention ;

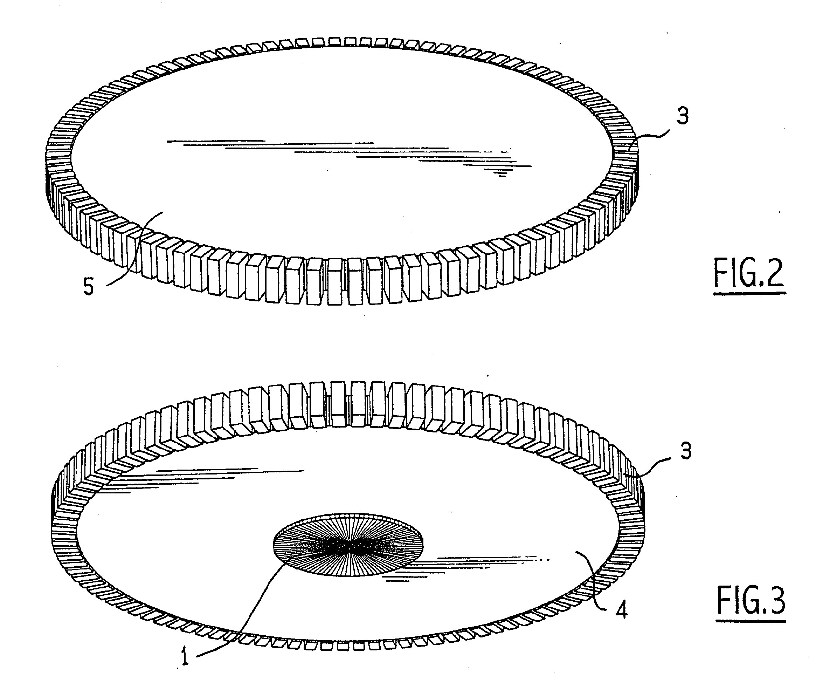

- les figures 2 et 3 sont des vues en perspective de ce même élément d'amplification ;

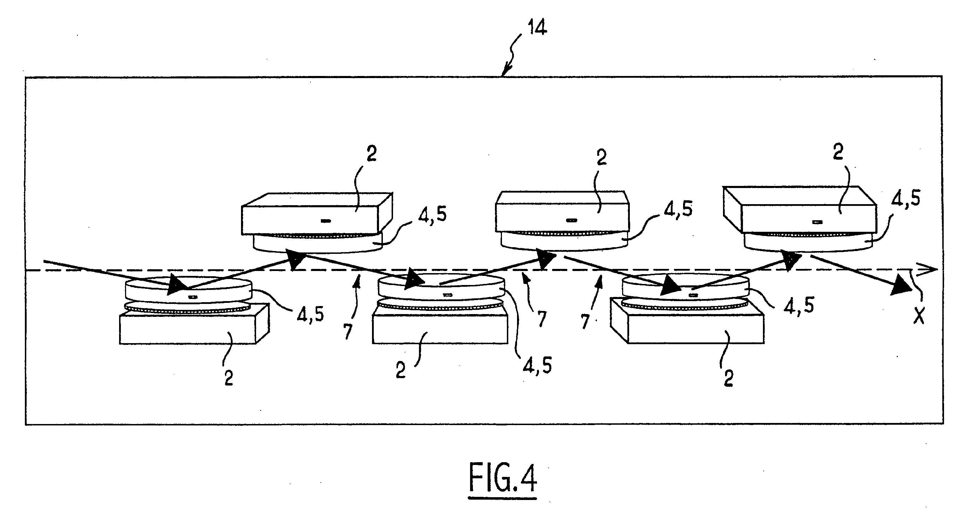

- la figure 4 est une vue générale d'un amplificateur incluant une série d'éléments selon les figures 1 à 3 ;
- la figure 5 est un schéma fonctionnel d'un laser à haute puissance, conforme à l'invention ;
- la figure 6 est un schéma fonctionnel d'un laser à haute puissance selon une autre variante de l'invention.

Le dispositif d'amplification représenté sur les figures présente un élément 1 de matériau actif non linéaire pris en sandwich entre un puits thermique 2 qui assure son refroidissement et un disque 4 qui se présente sous la forme d'une lentille optique transparente à la longueur d'onde de pompage, ainsi qu'à la (ou aux) longueur(s) d'onde du faisceau laser amplifié.

Une pluralité de diodes de pompage 3 sont réparties sur la circonférence du disque 4.

En variante, notamment si l'on souhaite réaliser un dispositif de plus petit dimensionnement, il peut être prévu d'interposer des fibres optiques entre les diodes 3 et la périphérie du disque 4, lesdites fibres étant destinées à guider la lumière émise par les diodes 3 jusqu'à la périphérie du disque 4.

L'élément 1 de matériau actif est un disque mince qui présente un diamètre de quelques centimètres, et une épaisseur de quelques dixièmes de millimètres.

Il est reçu dans un évidement défini au niveau d'une zone centrale du puits thermique 2, pour recevoir ledit disque 1.

En l'occurrence, le puits thermique 2 se présente sous la forme d'une plaque métallique 2a qui porte une collerette annulaire 2b de même épaisseur que le disque 1 et de diamètre intérieur correspondant au diamètre externe dudit disque.

Le disque 4 transparent présente au niveau de sa face opposée au disque 1 et au puits 2 une forme concave.

Il est coiffé par un disque 5, également transparent à la (ou aux) longueur(s) d'onde du faisceau laser amplifié. Ce disque 5 est de forme complémentaire à celle dudit disque 4, de sorte que l'ensemble constitué par le disque 4 et le disque 5 constitue ensemble une lame à faces parallèles.

Le fonctionnement d'un tel dispositif est le suivant.

Le disque 1 reçoit un faisceau laser 7 à amplifier qui provient d'une source laser non représentée et qui traverse le disque 5 et le disque 4.

Ce faisceau 7 traverse ledit disque 1 dans son épaisseur pour se réfléchir sur sa face opposée au disque 4 et traverser à nouveau ledit disque 1, le faisceau sortant du disque étant alors un faisceau 8 amplifié.

On notera à cet égard que le disque 1 est avantageusement métallisé au niveau de sa face opposée au disque 4. Une métallisation est également avantageusement prévue sur la face du disque 4 qui est directement en regard de l'élément 2 formant puits thermique.

Le pompage que réalisent les diodes 3 sur le disque 1 transfert une grande partie de l'énergie émise par lesdites diodes 3 pour amplifier le faisceau laser 8 qui est obtenu en sortie.

On notera que les deux éléments 4 et 5 constituent ensemble un arrangement optique qui permet de guider la lumière émise part les diodes 3 pour la concentrer sur le disque 1 en matériau non linéaire. Ces deux couches de verre 4 et 5 forment en effet entre elles un dioptre verre/verre, les faisceaux émis par les diodes 3 se réfléchissant au niveau de l'interface 4/5.

De cette façon, les faisceaux de pompage émis au niveau de la périphérie du disque 4 se propagent dans la couche inférieure 4 et sont concentrés en épaisseur en direction du centre du dispositif, c'est à dire sur le disque 1.

On notera qu'avec la structure qui est proposée, il est possible de disposer d'une part d'un nombre de diodes de pompage important et d'autre part de diodes de dimensions conséquentes (typiquement 10*10 mm ou supérieures).

Ceci permet de concentrer une forte puissance lumineuse dans la pastille et il en résulte une puissance d'amplification très importante.

Le disque 4 de verre peut par exemple présenter un diamètre typiquement compris entre 20 et 30 cm.

Les diodes réparties à sa circonférence peuvent typiquement être au nombre d'une centaine émettant chacune une puissance de l'ordre d'1 Joule à 100 Hz.

On place avantageusement une couche réfléchissante entre le disque 1 et le bloc refroidisseur 2 pour une réflexion optimale de la lumière de pompage et du faisceau laser à amplifier.

On place également avantageusement une couche réfléchissante entre le disque de verre formé par les couches 4 et 5 et le reste du bloc refroidisseur 2.

De telles couches réfléchissantes sont par exemple appliquées par dépôt métallique.

La couche réfléchissante est préférentiellement déposée dans ce cas sur la partie en verre.

Ainsi le disque 1 est pompable par environ 5 Joules; ce qui est compatible avec un disque de surface comprise entre 10 et 100 cm2 suivant le matériau.

On notera qu'une forme circulaire pour la périphérie du disque 4 permet de placer les diodes 3 directement face à ce pourtour, sans utiliser de lentilles de concentration de faisceaux : la forme circulaire du bord périphérique du disque 4b permet de produire un effet lentille tendant à concentrer les faisceaux émis en direction du centre de la pastille de verre 4/5.

De plus, l'épaisseur du disque 4 au niveau de son bord périphérique étant choisie au moins égale à la hauteur de chaque diode 3, de telles lentilles de concentration ne sont pas non plus nécessaires pour une concentration en épaisseur.

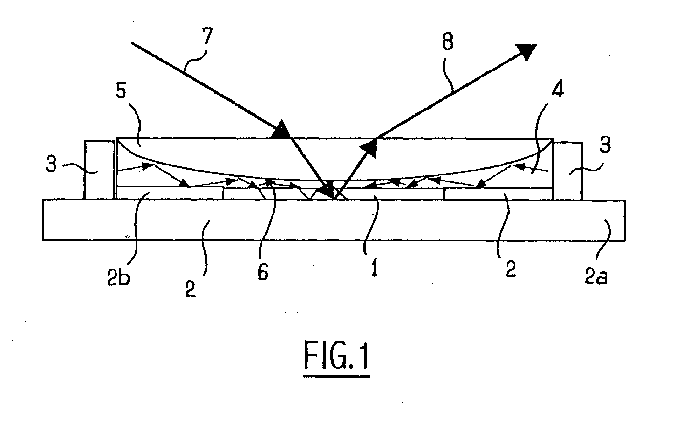

Avantageusement, on adopte une série de tels amplificateurs unitaires conformes à celui de la figure 1, placés en quinconce, c'est à dire l'un après l'autre le long d'un trajet principal d'axe X.

En d'autres termes, ils sont placés alternativement d'un côté et de l'autre de cet axe X, de sorte que le faisceau à amplifier se réfléchit successivement de part et d'autre de l'axe X en formant un zig-zag dont les pointes latérales correspondent à des réflexions sur des éléments unitaires comme celui de la figure 1.

On adopte préférentiellement un nombre d'éléments unitaires d'amplification compris entre 10 et 20 éléments.

On obtient, en sortie d'une telle succession de plusieurs disques pompés, un-faisceau d'énergie comprise entre 100 J et 10 kJ, en cadence grâce à la bonne évacuation thermique de chaque disque et au fait que les gradients thermiques dans chacun des disques 1 sont pratiquement parallèles aux faisceaux lasers, conduisant alors à une bonne qualité de front d'ondes.

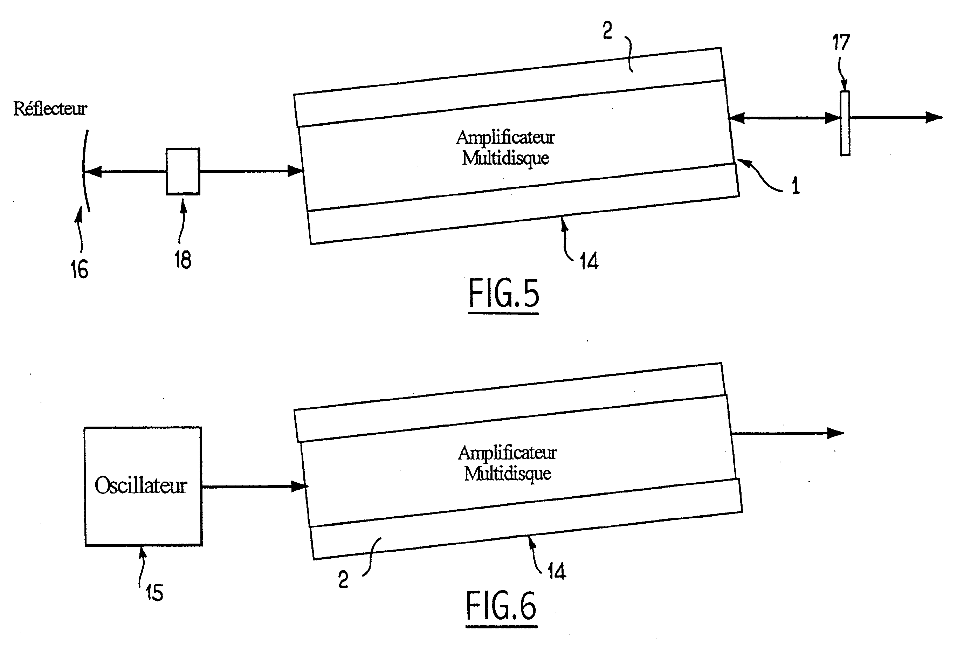

Les dispositifs d'ensemble présentés aux figures 5 et 6 intègrent ainsi chacun un amplificateur multi disque 14 placé de manière sensiblement oblique par rapport à la direction principale du faisceau laser généré dans le dispositif.

Dans le cas de la figure 5, le montage présente une configuration de type oscillateur, basée sur une utilisation à une extrémité d'un réflecteur 16 suivi d'un commutateur « Q switch » 18 et, à une autre extrémité, d'un coupleur 17 formant la sortie du dispositif. Latéralement et de part et d'autre de l'amplificateur multi disque 14 sont placés deux dispositifs de refroidissement référencés 2, à chaque fois constitués par un même bloc refroidisseur mis au contact de l'ensemble des amplificateurs unitaires présents d'un même côté de l'axe principal X du faisceau laser.

Sur la figure 6, on a représenté un montage en amplificateur optique pour oscillateur, dans lequel l'entrée du dispositif est formée par un oscillateur 15, la sortie étant constituée simplement par la sortie directe de l'amplificateur multi disque 14.

Le matériau actif non linéaire est avantageusement de type organique, constituant ainsi une structure OVCSEL.

## Revendications

1. Amplificateur de faisceau de type laser comprenant un élément de matériau actif non linéaire (1), ainsi qu'une pluralité de diodes de pompage (3) et une structure optique apte à guider par réflexions successives la lumière émise par lesdites diodes de pompage (3) jusqu'à l'élément actif, **caractérisé en ce que** l'élément de matériau actif non linéaire (1) est mis en sandwich entre un élément formant lentille de guidage (4) qui est superposé à l'élément de matériau actif non linéaire et un élément (2) formant puits thermiques, a lumière émise par les diodes de pompage (3) étant injectée dans l'élément formant lentille de guidage à la périphérie de celui-ci et étant guidée jusqu'à l'élément actif par réflexions successives dans l'épaisseur dudit élément formant lentille de guidage.

2. Amplificateur de lumière selon la revendication 1, **caractérisé en ce que** les diodes de pompage sont réparties à la périphérie de l'élément formant lentille de guidage.

3. Amplificateur selon la revendication 1, la lumière émise par les diodes de pompage est guidée jusqu'à l'élément formant lentille par des moyens de type fibres optiques.

4. Amplificateur de lumière selon l'une des revendications précédentes, **caractérisé en ce que** dément de matériau actif non linéaire (1) et la structure optique qui lui est superposée sont de formes générales sensiblement plates, la structure optique (4,5) étant d'étendue supérieure à celle de l'élément actif (1).

5. Amplificateur de lumière selon l'une des revendications précédentes, **caractérisé en ce que** la structure optique a une forme générale de disque l'élément en matériau actif (1) se présentant quant à lui sous la forme d'un disque mince, la structure optique et l'élément de matériau actif étant centrés l'un par rapport à l'autre.

6. Amplificateur de lumière selon l'une quelconque des revendications précédentes, **caractérisé en ce que** l'élément de la structure optique dans l'épaisseur duquel la lumière des diodes de pompage est guidée par réflexion présente une épaisseur qui diminue de sa périphérie vers l'élément actif.

7. Amplificateur de lumière selon l'une des revendications précédentes, **caractérisé en ce que** la structure optique (4,5) comporte un élément transparent qui est superposé à l'élément dans l'épaisseur duquel la lumière des diodes de pompage est guidée par réflexions successives, du côté de celui-ci opposé à l'élément actif, ces deux éléments formant ensemble un dioptre qui réfléchit la lumière des diodes de pompage, tout en permettant à la lumière laser incidente de traverser la structure optique pour atteindre l'élément actif et à la lumière laser amplifiée de traverser la structure optique pour sortir de l'amplificateur.

8. Amplificateur selon l'une des revendications précédentes, **caractérisé en ce que** la face de l'élément actif et/ou la face dé la structure optique directement en contact avec l'élément formant puits thermique est (sont) métallisée(s).

9. Dispositif selon l'une des revendications précédentes, **caractérisé en ce que** le matériau actif est de type organique.

10. Dispositif d'émission laser comprenant une source laser et un ou plusieurs amplificateurs selon l'une quelconque des revendications précédentes.

11. Dispositif selon la revendication précédente, **caractérisé en ce qu'**il comporte plusieurs amplificateurs et **en ce que** ces derniers sont disposés en quinconce de part et d'autre d'un axe optique principal (X) alternativement d'un côté et de l'autre de cet axe optique (X) de sorte que le faisceau amplifié est réfléchi successivement de part et d'autre de cet axe optique.

## Claims

1. An amplifier of the laser beam type comprising a non-linear active material element (1), as well as a plurality of pumping diodes (3) and an optical structure capable of guiding by successive reflections the light emitted by said pumping diodes (3) as far as the active element, **characterized in that** the non-linear active material element (1) is sandwiched between an element forming a guiding lens (4) which is superposed to the non-linear active material element and an element (2) forming heat sinks, the light emitted by the pumping diodes (3) being injected into the element forming a guiding lens at the periphery of the latter and being guided as far as the active element by successive reflections in the thickness of said element forming a guiding lens.

2. The light amplifier according to claim 1, **characterized in that** the pumping diodes are distributed at the periphery of the element forming a guiding lens.

3. The light amplifier according to claim 1, the light emitted by the pumping diodes is guided as far as the lens-forming element by means of the optical fibers type.

4. The light amplifier according to any of the preceding claims, **characterized in that** the non-linear active material element (1) and the optical structure which is superposed to it are of general substantially flat shapes, the optical structure (4, 5) being of larger extent than that of the active element (1).

5. The light amplifier according to any of the preceding claims, **characterized in that** the optical structure has the general shape of a disk, the active material element (1) as for it appearing as a thin disk, the optical structure and the active material elements being centered relatively to each other.

6. The light amplifier according to any of the preceding claims, **characterized in that** the element of the optical structure in the thickness of which the light of the pumping diodes is guided by reflection, has a thickness which decreases from its periphery towards the active element.

7. The light amplifier according to any of the preceding claims, **characterized in that** the optical structure (4, 5) includes a transparent element which is superposed to the element in the thickness of which the light of the pumping diodes is guided by successive reflections, on the site of the latter opposite to the active element, both of these elements forming together a diopter which reflects the light of the pumping diodes, while allowing the incident laser light to cross the optical structure in order to reach the active element and the amplified laser light to cross the optical structure in order to emerge from the amplifier.

8. The amplifier according to any of the preceding claims, **characterized in that** the face of the active element and/or the face of the optical structure directly in contact with the element forming a heat sink is(are) metalized.

9. The device according to any of the preceding claims, **characterized in that** the active material is of the organic type.

10. A laser emission device comprising a laser source and one or more amplifiers according to any of the preceding claims.

11. The device according to the preceding claim, **characterized in that** it includes several amplifiers and **in that** the latter are staggered on either side of a main optical axis (X) alternately on one side and on the other of this optical axis (X) so that the amplified beam is successively reflected on either side of this optical axis.

## Patentansprüche

1. Verstärker für einen Strahl vom Lasertyp, Folgendes umfassend: ein Element aus einem nichtlinearen aktiven Material (1) sowie mehrere Pumpdioden (3) und eine optische Anordnung, die dafür eingerichtet ist, das von den Pumpdioden (3) emittierte Licht durch aufeinanderfolgende Reflexionen bis zum aktiven Element zu leiten, **dadurch gekennzeichnet, dass** das Element aus dem nichtlinearen aktiven Material (1) in einer Sandwichanordnung zwischen einem Element, das eine Führungslinse (4) bildet, die auf dem Element aus dem nichtlinearen aktiven Material sitzt, und einem Element (2), das eine Wärmesenke bildet, liegt, wobei das von den Pumpdioden (3) emittierte Licht in das die Führungslinse bildende Element an dessen Rand eingespeist und durch aufeinanderfolgende Reflexionen im Inneren des die Führungslinse bildenden Elements bis zum aktiven Element geleitet wird.

2. Lichtverstärker nach Anspruch 1, **dadurch gekennzeichnet, dass** die Pumpdioden am Rand des die Führungslinse bildenden Elements verteilt sind.

3. Verstärker nach Anspruch 1, bei dem das von den Pumpdioden emittierte Licht durch Mittel vom Lichtwellenleitertyp bis zu dem die Linse bildenden Element geleitet wird.

4. Lichtverstärker nach einem der vorhergehenden Ansprüche, **dadurch gekennzeichnet, dass** das Element aus dem nichtlinearen aktiven Material (1) und die auf ihr sitzende optische Anordnung im Wesentlichen flache allgemeine Formen haben, wobei die Abmessung der optischen Anordnung (4, 5) größer ist als diejenige des aktiven Elements (1).

5. Lichtverstärker nach einem der vorhergehenden Ansprüche, **dadurch gekennzeichnet, dass** die optische Anordnung die allgemeine Form einer Scheibe hat, wobei das Element aus dem aktiven Material (1) seinerseits in Form einer dünnen Scheibe vorliegt und wobei die optische Anordnung und das Element aus dem aktiven Material relativ zueinander zentriert sind.

6. Lichtverstärker nach einem der vorhergehenden Ansprüche, **dadurch gekennzeichnet, dass** das Element der optischen Anordnung, in dessen Innerem das Licht der Pumpdioden durch Reflexion geleitet wird, eine Dicke hat, die von seinem Rand in Richtung zum aktiven Element abnimmt.

7. Lichtverstärker nach einem der vorhergehenden Ansprüche, **dadurch gekennzeichnet, dass** die optische Anordnung (4, 5) ein durchlässiges Element umfasst, das auf dem Element sitzt, in dessen Innerem das Licht der Pumpdioden durch aufeinanderfolgende Reflexionen geleitet wird, und dies auf dessen dem aktiven Element gegenüberliegenden Seite, wobei diese beiden Elemente zusammen eine Grenzfläche bilden, die das Licht der Pumpdioden reflektiert und die es dabei gleichzeitig dem einfallenden Laserlicht gestattet, die optische Anordnung zu durchlaufen, um das aktive Element zu erreichen, und es dem verstärkten Laserlicht gestattet, die optische Anordnung zu durchlaufen, um den Verstärker zu verlassen.

8. Verstärker nach einem der vorhergehenden Ansprüche, **dadurch gekennzeichnet, dass** die Seite des aktiven Elements und/oder die Seite der optischen Anordnung, die in direktem Kontakt mit dem Element steht oder stehen, das die Wärmesenke bildet, metallisiert ist oder sind.

9. Vorrichtung nach einem der vorhergehenden Ansprüche, **dadurch gekennzeichnet, dass** das aktive Material vom organischen Typ ist.

10. Vorrichtung zur Laseremission, die eine Laserquelle und einen oder mehrere Verstärker nach einem der vorhergehenden Ansprüche umfasst.

11. Vorrichtung nach dem vorhergehenden Anspruch, **dadurch gekennzeichnet, dass** sie mehrere Verstärker umfasst, und **dadurch**, dass diese letzteren gegeneinander versetzt auf beiden Seiten einer optischen Hauptachse (X) angeordnet sind, und dies abwechselnd auf einer Seite und der anderen Seite der optischen Achse (X) und derart, dass der verstärkte Strahl nacheinander auf beiden Seiten dieser optischen Achse reflektiert wird.
